Europäisches Patentamt

European Patent Office

Office européen des brevets

(19)

(11) **EP 1 019 909 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: **98947490.3**

(22) Anmeldetag: **31.08.1998**

(51) Int Cl.⁷: **G11B 19/12**, G11B 7/085

(86) Internationale Anmeldenummer:
**PCT/EP98/05527**

(87) Internationale Veröffentlichungsnummer:
**WO 99/17287 (08.04.1999 Gazette 1999/14)**

(54) **GERÄT ZUM LESEN ODER BESCHREIBEN OPTISCHER AUFZEICHNUNGSTRÄGER MIT DISKTYPERKENNUNGSMITTEL**

DEVICE FOR READING OR WRITING ON OPTICAL RECORDING MEDIA WITH DISK TYPE RECOGNITION MEANS

APPAREIL DE LECTURE OU D'ECRITURE DE SUPPORTS D'ENREGISTREMENT OPTIQUES COMPORTANT UN ELEMENT D'IDENTIFICATION DE TYPE DE DISQUE

(84) Benannte Vertragsstaaten:
**DE FR GB IT**

(30) Priorität: **30.09.1997 DE 19743068**

(43) Veröffentlichungstag der Anmeldung:
**19.07.2000 Patentblatt 2000/29**

(73) Patentinhaber: **DEUTSCHE THOMSON-BRANDT GMBH**
**78048 Villingen-Schwenningen (DE)**

(72) Erfinder: **GRIMM, Michael**
**D-78050 Villingen-Schwenningen (DE)**

(74) Vertreter: **Thies, Stephan (DE) et al**
**Deutsche Thomson-Brandt GmbH European Patent Operations Karl-Wiechert-Allee 74 30625 Hannover (DE)**

(56) Entgegenhaltungen:
**EP-A- 0 762 393        US-A- 5 054 013**

• **PATENT ABSTRACTS OF JAPAN vol. 096, no. 006, 28. Juni 1996 & JP 08 036827 A (VICTOR CO OF JAPAN LTD), 6. Februar 1996**
• **PATENT ABSTRACTS OF JAPAN vol. 097, no. 005, 30. Mai 1997 & JP 09 017106 A (AIWA CO LTD), 17. Januar 1997**
• **PATENT ABSTRACTS OF JAPAN vol. 012, no. 345 (P-759), 16. September 1988 & JP 63 103471 A (FUJITSU GENERAL LTD), 9. Mai 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 019 909 B1

**Beschreibung**

Die vorliegende Erfindung betrifft ein Gerät zum Lesen und/oder Beschreiben optischer Aufzeichnungsträger, welches ein Disktyperkennungsmittel zum Erkennen des Typs des Aufzeichnungsträgers aufweist, sowie ein entsprechendes Verfahren.

Ein derartiges Gerät ist aus der US-A-5,414,684 bekannt. Bei diesem bekannten Gerät wird zum Erkennen des Typs des Aufzeichnungsträgers zunächst versucht, dessen Inhaltsverzeichnis zu lesen, den sogenannten TOC oder Table of Contents. Ist ein Lesen des TOC nicht möglich, so werden ein oder mehrere erneute Versuche unternommen, an einer oder mehreren anderen Stellen des Aufzeichnungsträgers Informationen zu lesen. Aus dem Erfolg oder Mißerfolg dieser Versuche wird auf den Typ des optischen Aufzeichnungsträgers geschlossen.

Nachteilig an dem bekannten Gerät ist, daß zu jedem Versuch, Informationen zu lesen, ein kompletter Setup-Vorgang erfolgen muß. Dazu gehören unter anderem das Schließen von Fokusregelkreis, Spurregelkreis, Antriebsregelkreis und ähnliches. Diese Vorgehensweise ist relativ kompliziert und zeitaufwendig.

Aus der JP-A-09 017 106 ist ein Gerät zum Lesen optischer Aufzeichnungsträger bekannt, welches Disktyperkennungsmittel aufweist, sowie ein optisches Abtastmittel und einen Fokusregelkreis, wobei das Disktyperkennungsmittel einen Mirrorsignalbildner, einen Zähler und eine Auswerteeinheit aufweist.

Aus der JP-A-63 103 471 ist ein Verfahren zum Erkennen des Typs eines optischen Aufzeichnungsträgers bekannt, bei welchem zwischen zwei Aufzeichnungsträgern unterschieden wird, deren Reflektivität unterschiedlich ist. Nachteilig an diesem Verfahren ist anzusehen, daß bei Aufzeichnugsträgern unterschiedlichen Typs, die gleiche oder nahezu gleichen Reflektivität aufweisen, nicht unterschieden werden können.

Aufgabe der Erfindung ist es, ein Gerät mit Disktyperkennungsmittel vorzuschlagen, welches besser als die bekannten Geräte dazu in der Lage ist, den Typ des in das Gerät eingelegten Aufzeichnungsträgers innerhalb einer kurzen Zeit sicher zu erkennen. Eine weitere Aufgabe der Erfindung ist es, ein entsprechendes Verfahren anzugeben.

Erfindungsgemäß werden diese Aufgaben durch die in den unabhängigen Ansprüchen angegebenen Merkmale gelöst. Vorteilhafte Weiterbildungen dazu sind in den abhängigen Ansprüchen angegeben.

Das Disktyperkennungsmittel weist erfindungsgemäß einen Schwellwertbildner zum Bilden eines von mehreren möglichen Schwellwerten auf. Dies hat zur Folge, daß das daraufhin erzeugte Mirrorsignal mehr oder weniger gut ausgebildet ist, was sich beispielsweise in der Anzahl zählbarer Flanken äußert. Der entsprechende Wert des Zählers nimmt dann eine größeren oder kleineren Wert an. Dies hat den Vorteil, das eine schnelle Erkennung des Typs des Aufzeichnungsträgers erzielt wird. Das Disktyperkennungsmittel weist Elemente mit relativ einfacher Funktion auf, mittels denen auch bei zwar geschlossenem Fokusregelkreis aber noch nicht möglichem Lesen des Aufzeichnungsträgers eine Information über den Disktyp erzielbar ist. Das Mirrorsignal ist ein Signal, welches unterschiedliche Werte annimmt, wenn das Abtastmittel eine Informationsspur oder einen Bereich zwischen zwei Informationsspuren abtastet. Der zwischen zwei Informationsspuren befindliche Bereich kann dabei frei von Informationen sein, er kann aber auch selbst Informationen tragen, beispielsweise Steuerinformationen oder auch Informationen einer Art, die derjenigen der Informationsspuren entspricht.

Erfindungsgemäß ist ein Eingang des Mirrorsignaldetektors mit einem Ausgang des Abtastmittels und ein weiterer Eingang mit dem Schwellwertgenerator verbunden, sowie der Zähler mit einem Ausgang des Mirrorsignaldetektors und mit einem Eingang der Auswerteeinheit. Bei dieser vorteilhaften Kombination der Einzelelemente gibt der Schwellwertgenerator einen Schwellwert zur Bildung des Mirrorsignals vor. Der Zähler zählt das Auftreten bestimmter Zustände des Mirrorsignals, beispielsweise die Anzahl von High- oder Low-Zuständen, entsprechende Übergänge, Nulldurchgänge oder ähnliches. Die Auswerteeinheit wertet den Zählerstand zur Ermittlung des Typs des Aufzeichnungsträgers aus.

Eine vorteilhafte Weiterbildung der Erfindung sieht vor, daß das Gerät ein Schichtdickenerkennungsmittel aufweist. Dies hat den Vorteil, daß das Schichtdickenerkennungsmittel ein zusätzliches Kriterium liefert, mittels dessen bestimmte Einstellungen des Geräts geeignet vorgewählt werden, um die Erkennung des Disktyps weiter zu beschleunigen. Das zusätzliche Kriterium dient zusätzlich oder alternativ auch als Kriterium zur Erkennung des Disktyps, wodurch die Erkennung beschleunigt oder ihre Zuverlässigkeit erhöht wird. Das Schichtdickenerkennungsmittel dient dazu, die Dicke einer Schutzschicht zu ermitteln, welche einer informationstragenden Schicht des Aufzeichnungsträgers überlagert ist.

Gemäß einer weiteren Variante der Erfindung ist vorgesehen, daß das Gerät ein Abstandserkennungsmittel zum Bestimmen des Abstands unterschiedlicher Schichten des Aufzeichnungsträgers voneinander aufweist. Auch dieses zusätzliche Kriterium trägt zur Beschleunigung und/oder zur Erhöhung der Zuverlässigkeit der Erkennung des Disktyps bei. Die unterschiedlichen Schichten sind dabei vorteilhafterweise zwei oder mehrere Informationsschichten. Ebenfalls im Rahmen der Erfindung liegend ist es aber auch, daß es sich dabei um sonstige, im Aufbau des optischen Aufzeichnungsträgers vorhandene und detektierbare Schichten handelt.

Das erfindungsgemäße Verfahren zum Erkennen des Typs eines optischen Aufzeichnungsträgers weist die folgenden Verfahrensschritte auf: aa) Fokussieren auf eine Informationsschicht des Aufzeichnungsträgers; bb) Setzen eines von mehreren möglichen Schwellwerten für die Erzeugung eines Mirrorsignals, wobei dieser Schwellwert zumindest für einen Typ Aufzeichnungsträger ungeeignet ist; cc) Zählen von Übergängen des Mirrorsignals; und dd) Ermitteln des Typs des Aufzeichnungsträgers anhand des Zählwerts. Dies hat den Vorteil, daß kein Spurfolgebetrieb und keine Signalerkennung, also kein Lesen der auf dem Aufzeichnungsträger gespeicherten Informationen erforderlich ist, was eine schnelle Erkennung des Disktyps ermöglicht. Sobald die Art des Aufzeichnungsträgers erkannt ist, werden auf diesen Typ Aufzeichnungsträger angepaßte Einstellungen des Geräts, insbesondere für Fokus-, Spurfolge- und andere Regelkreise, gewählt. Damit ist es möglich, die Anlaufphase, also die Zeit vom Einlegen des Aufzeichnungsträgers in das Gerät oder vom Geben eines Startbefehls bis zum Beginn des Abspielens oder Aufzeichnens kurz zu halten. Die Wartezeit für den Benutzer wird somit vorteilhafterweise verkürzt.

Erfindungsgemäß wird im Schritt dd) der Aufzeichnungsträger als zu einem n-ten Typ gehörig ermittelt, wenn der Zählwert in einem n-ten Wertebereich liegt, wobei n eine ganze Zahl ist. Dies hat den Vorteil, daß gegebenenfalls eine Vielzahl unterschiedlicher Typen von Aufzeichnungsträgern erkannt werden kann, ohne daß die Zählwerte notwendigerweise exakt sein müssen. Im einfachsten Fall wird geprüft, ob der Zählwert größer oder kleiner als ein Grenzwert ist. Dieser Grenzwert wird als Grenze zwischen zwei Wertebereichen angesehen. Im Extremfall wird ein einziger Typ Aufzeichnungsträger beispielsweise dadurch erkannt, daß der Zählwert größer als ein Grenzwert ist. Für n=2 wird beispielsweise der Aufzeichnungsträger als zu einem ersten Typ gehörig ermittelt, wenn der Zählwert zwischen Null und einem ersten Wert $m1$ liegt, während er als zu einem zweiten Typ gehörig ermittelt wird, wenn der Zählwert zwischen einem zweiten Wert $m2$ und einem dritten Wert $m3$ liegt. Dabei kann durchaus der Anfangswert $m0$ auch ein von Null verschiedener Wert sein, oder erster Wert $m1$ und zweiter Wert $m2$ können gleich sein. Entsprechendes gilt für drei oder eine größere Anzahl zu erkennender Disktypen.

Gemäß einer vorteilhaften Weiterbildung des Verfahrens ist vorgesehen, daß der Abtaststrahl des Abtastmittels des Geräts über einen Bereich des Aufzeichnungsträgers bewegt wird, der größer ist als ein der maximal auftretenden Exzentrizität entsprechender Bereich. Dies hat den Vorteil, daß durch die dadurch erreichte große Anzahl von vom Abtaststrahl überkreuzten Informationsspuren eine schnellere und sicherere Erkennung ermöglicht wird. Zur Exzentrizität tragen dabei sowohl die herstellungsbedingte Exzentrizität des Aufzeichnungsträgers bei, also dessen nicht exakt zur Rotationssymmetrieachse zentrierten kreis- oder spiralförmigen Informationsspuren, als auch eine betriebsbedingt hervorgerufene Exzentrizität, beispielsweise durch nicht exaktes Zentrieren des Aufzeichnungsträgers im Gerät. Für die Exzentrizität existieren Toleranzbereiche, die in der Praxis im allgemeinen nicht überschritten werden und die hier als Untergrenze der induzierten Bewegung des Abtaststrahls dienen.

Nach einer vorteilhaften Ausgestaltung der Erfindung ist vorgesehen, daß die Schritte bb) und cc) mehrfach durchlaufen werden, wobei im Schritt bb) jeweils ein anderer Schwellwert gesetzt wird. Dies hat den Vorteil, daß eine größere Anzahl unterschiedlicher Disktypen relativ schnell erkennbar ist. Ein weiterer Vorteil liegt darin, daß, in Kombination mit mehreren Wertebereichen, eine geringe Anzahl von Durchläufen genügt, um eine große Anzahl unterschiedlicher Typen unterscheiden zu können. Weiterhin ist durch eine Gegenprüfung mittels unterschiedlicher Durchläufe relativ schnell eine Erhöhung der Zuverlässigkeit der Prüfung möglich.

Erfindungsgemäß ist weiterhin vorgesehen, nach der Bestimmung des Typs des Aufzeichnungsträgers zu prüfen, ob ein Fokussieren auf eine weitere Informationsschicht möglich ist. Dies hat den Vorteil, daß das Vorliegen eines mehrschichtigen Aufzeichnungsträgers bereits mit auf den Aufzeichnungsträger angepaßten Einstellungen des Geräts erfolgt, was die Zeit bis zum Beenden der kompletten Disktyperkennung reduziert und auch das Erkennen mehrschichtiger Aufzeichnungsträger ermöglicht.

Nach einer weiteren Ausgestaltungsform der Erfindung wird das erfindungsgemäße Verfahren zunächst zur Identifikation des Typs der Informationsschicht, auf die die optische Abtasteinheit fokussiert, genutzt, anschließend werden die Einstellungen des Geräts auf den ermittelten Schichttyp angepaßt, es wird von der genannten Informationsschicht gelesen und aus der gelesenen Information wird der Typ des Aufzeichnungsträgers bestimmt. Dieses Verfahren hat den Vorteil, daß der Erkennungsvorgang nochmals verkürzt wird, da eine Suche nach weiteren Informationsschichten nicht erforderlich ist, wenn aus der Information, die von der ersten Informationsschicht gelesen wird das Vorhandensein und gegebenenfalls der Typ weiterer Schichten erkennbar ist.

Ein weiteres vorteilhaftes Verfahren zum Erkennen des Typs eines optischen Aufzeichnungsträgers mittels einer Größe Mirror-Signal in einem Gerät zum Lesen und/oder Beschreiben optischer Aufzeichnungsträger ist in Anspruch 11 angegeben.

Dieses Verfahren ist insbesondere dann vorteilhaft anwendbar, wenn der Mirror-Signal-Detektor des Geräts zumindest ein frequenzabhängig variables Element aufweist. Dies hat den Vorteil, daß ein frequenzabhängig variables Element in seinen Eigenschaften an die Spurkreuzfrequenz im Betrieb adaptiv anpaßbar ist, so daß Störeinflüsse, die in bestimmten Frequenzbereichen auftreten, frequenzselektiv kompensiert bzw. minimiert werden. Der Mirror-Signal-Detektor erzeugt ein Mirror-Signal, welches anzeigt, ob das Abtastmittel eine Datenspur abtastet oder sich zwischen zwei Datenspuren befindet. Dazu wird im allgemeinen das von der Platte gelesene hochfrequente Signal betrachtet. Es weist eine große Modulation auf, wenn das Abtastmittel eine Datenspur abtastet, während es nur schwach moduliert ist, wenn das Abtastmittel zwischen zwei Datenspuren abtastet. Bei hohen Spurkreuzfrequenzen kommt es vor, daß die Unterschiede in der Modulation zwischen Datenspur und dem Zwischenraum zwischen zwei Datenspuren nur noch recht gering sind. Geringfügig modulierte Eingangssignale, treten beispielsweise bei Aufzeichnungsträgern hoher Dichte auf. Dort nimmt beim Überqueren einer Informationsspur die Intensität des hochfrequenten Signals teilweise nur um 20% ab im Vergleich zum Überqueren des zwischen den Informationsspuren liegenden spiegelnden Bereichs, wohingegen dieser Wert bei herkömmlichen Compakt Disks bei etwa 65% liegt. Vorteilhaft weist das Gerät eine Steuerungseinrichtung auf, die den Schwellwertbildner sowie einen Spurregler beeinflußt. Dies hat den Vorteil, das zum Bestimmen des Typs des optischen Aufzeichnungsträgers der Spurregler inaktiv und der Schwellwertbildner auf einen festen Schwellwert eingestellt wird. Das Abschalten des Spurreglers bewirkt, daß Informationsspuren des Aufzeichnungsträgers überquert werden. Je nach Typ des Aufzeichnungsträgers ist es möglich, zu einem geeignet eingestellten Schwellwert ein Mirror-Signal zu ermitteln oder dies ist unmöglich, woraus auf den Typ des optischen Aufzeichungsträgers geschlossen wird. Die Mittelwertbildung erfolgt ebenfalls in Abhängigkeit von der Frequenz des Mirror-Signals. Dies hat den Vorteil, daß bei höherfrequentem Signal auch der Mittelwert höherfrequent gebildet wird, um möglichst rasch an eine eventuell geänderte Signalintensität angepaßt zu sein, wie sie z.B. bei Aufzeichnungsträgern hoher Speicherdichte, wie oben angegeben, auftritt.

Es ist weiterhin vorgesehen, daß statt eines einzigen Schwellwerts, ein oberer und ein unterer Schwellwert verwendet werden, wobei das Mirror-Signal bei Überschreiten des oberen Schwellwerts auf einen ersten Wert, beispielsweise den Wert 1, und bei Unterschreiten des unteren Schwellwerts auf einen zweiten Wert, beispielsweise den Wert 0, gesetzt wird, während sein Wert andernfalls beibehalten wird. Dies hat den Vorteil, daß der Wert des Mirror-Signals im Übergangsbereich zwischen den beiden Werten nicht unnötig stark schwankt, d.h. ruhiger wird. Durch die Hysterese wird ein Hin- und Herspringen des Werts des Mirror-Signals im Übergangsbereich zwischen den beiden Werten vermieden. Dadurch wird auch die Frequenzbestimmung des Mirror-Signals noch genauer, die Qualität des erfindungsgemäßen Verfahrens wird erhöht.

Ein weiterer Vorteil des erfindungsgemäßen Verfahrens besteht darin, daß ein bestimmter Schwellwert vorgegeben, und daß überprüft wird, ob sich dazu ein Mirror-Signal ermitteln läßt oder nicht. Dies hat den Vorteil, daß sich mittels eines ohnehin vorhandenen Mirror-Signal-Detektors, d.h. ohne zusätzlichen Aufwand, der Typ des Aufzeichnungsträgers bestimmen läßt. Ist ein Mirror-Signal ermittelbar, so wird ein erster Typ Aufzeichnungsträger abgetastet, ist dagegen kein Mirror-Signal ermittelbar, so handelt es sich um einen zweiten Typ Aufzeichnungsträger. Die unterschiedlichen Typen von Aufzeichnungsträgern unterscheiden sich beispielsweise in ihrer Spuranordnung, der Größe der Spurbreite oder des Spurabstands, wie es beispielsweise bei herkömmlichen CDs und Aufzeichnungsträgern hoher Speicherdichte, wie DVDs gegeben ist.

Vorteilhafterweise werden mehrere unterschiedliche Schwellwerte nacheinander getestet. Dies hat den Vorteil, daß die Anzahl erkennbarer unterschiedlicher Typen von Aufzeichnungsträgern erhöht ist. Auch in ihren Eigenschaften nur gering variierende Typen sind somit anhand des zu unterschiedlichen Schwellwerten bestimmbaren Mirror-Signals unterscheidbar. Beispielsweise unterscheiden sich einmal beschreibbare, mehrfach beschreibbare und nicht beschreibbare optische Aufzeichnungsträger teilweise nur geringfügig im Hinblick auf den zum Bilden des Mirror-Signals geeigneten Schwellwert, und können aufgrund der Mehrzahl verwendeter Schwellwerte mittels des erfindungsgemäßen Verfahrens dennoch sicher erkannt werden. Die Erfindung ist dazu geeignet, unterschiedliche Typen von Aufzeichnungsträgern, wie unter anderem CD, CD-R, CD-RW und DVD, DVD-RAM und andere voneinander zu unterscheiden.

Erfindungsgemäß werden während der Durchführung der Verfahrensschritte Informationsspuren des Aufzeichnungsträgers überquert, was im einfachsten Fall durch Abschalten eines Spurreglers und Ausnutzen einer Exzentrizität des Aufzeichnungsträgers oder seiner Lagerung im Gerät erfolgt. Besonders vorteilhaft ist es, ein Überqueren von Informationsspuren aktiv durchzuführen. Dies hat den Vorteil, daß auf jeden Fall die Bedingungen zum Erzeugen eines Mirror-Signals gegeben sind, und somit auch ein nicht vorhandenes Mirror-Signal eindeutig dem Typ des Aufzeichnungsträger zuzuschreiben ist.

Weitere Vorteile der Erfindung sind aus der nachfolgenden Beschreibung vorteilhafter Ausführungsbeispiele ersichtlich. Dabei versteht es sich, daß die Erfindung nicht auf die beschriebenen Ausführungsbeispiele beschränkt ist. Es zeigen:

Fig. 1  schematische Darstellung eines erfindungsgemäßen Geräts,

Fig. 2  schematische Darstellung eines Ausführungsbeispiels eines erfindungsgemäßen Geräts,

Fig. 3  Diagramm typischer, in einem erfindungsgemäßen Gerät auftretender Signale,

Fig. 4  Blockschaltbild eines erfindungsgemäßen Geräts,

Fig. 5  Flußdiagramm eines erfindungsgemäßen Verfahrens,

Fig. 6  Flußdiagramm einer Variante des Verfahrens

Fig. 7 Flußdiagramm einer weiteren Variante des Verfahrens.

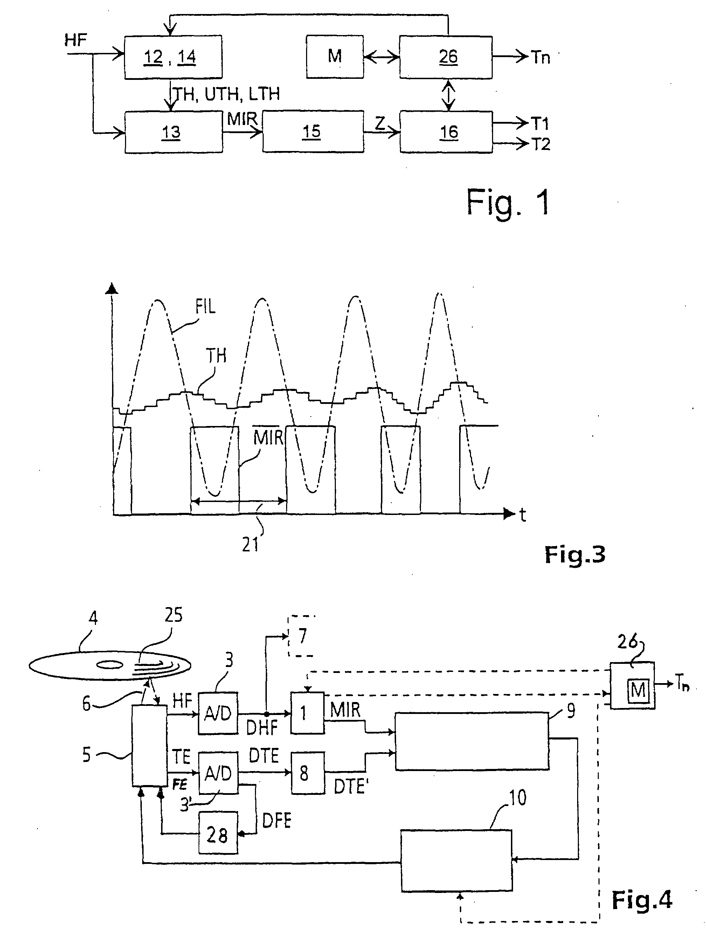

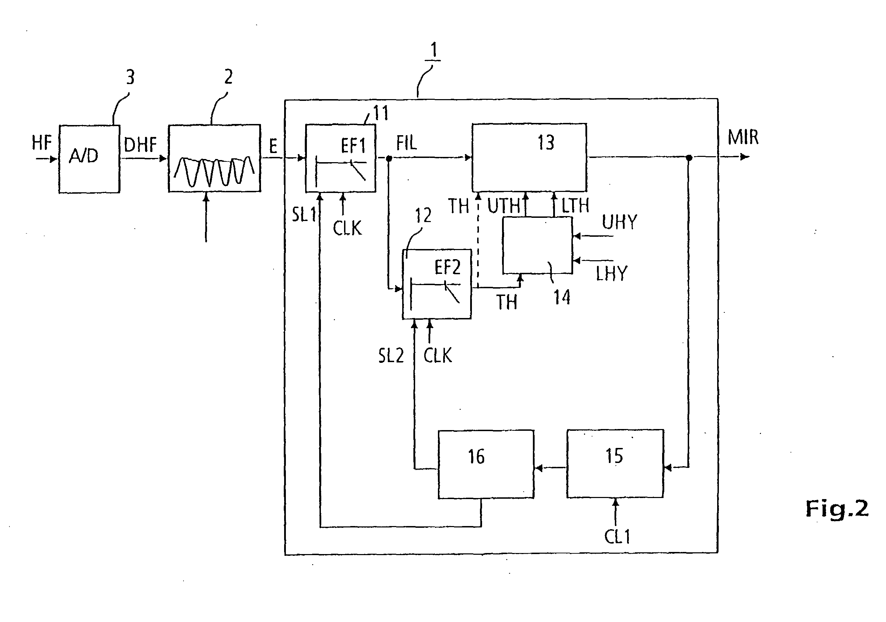

Fig. 1 zeigt in schematischer Darstellung das Disktyperkennungsmittel eines erfindungsgemäßen Geräts. Ein von dem hier nicht dargestellten Abtastmittel 5 abgegebenes hochfrequentes Datensignal HF wird einem Schwellwertbildner 12,14 und einem Mirrorsignalbildner 13 zugeführt. Der Schwellwertbildner 12,14 erzeugt einen Schwellwert TH, welcher dem Mirrorsignalbildner 13 zugeführt wird. In einer vorteilhaften Variante werden eine Mehrzahl von Schwellwerten gebildet, die hier als oberer Schwellwert UTH und unterer Schwellwert LTH angegeben sind. Das vom Mirrorsignalbildner 13 erzeugte Mirrorsignal MIR wird einem Zähler zugeführt, der im folgenden auch als Frequenzzähler 15 bezeichnet ist. Die Funktionen von Schwellwertbildner 12,14 und Mirrorsignalbildner 13 werden unten näher erläutert.

Der Frequenzzähler 15 zählt, im Ausführungsbeispiel positive, Flanken des Mirrorsignals MIR und gibt, nach einer durch einen von außen vorgegebenen Takt bestimmten Zeit, den Zählwert Z an einen als Auswerteeinheit dienenden Logikblock 16 weiter. Eine Steuerungseinheit 26 kann sowohl Informationen vom Logikblock 16 empfangen als auch an diesen weitergeben. Sie ist mit einem Speicher M verbunden und mit dem Schwellwertbildner 14. Zum Bestimmen des Typs des Aufzeichnungsträgers gibt die Steuerungseinheit 26 dem Schwellwertbildner 14 einen einzustellenden Schwellwert TH vor. Dieser entspricht im allgemeinen nicht dem für den aktuell eingelegten Aufzeichnungsträger angepaßten Schwellwert. Dies hat zur Folge, daß das daraufhin erzeugte Mirrorsignal MIR mehr oder weniger gut ausgebildet ist, was sich beispielsweise in der Anzahl zählbarer Flanken äußert. Der Zählwert Z nimmt dann eine größeren oder kleineren Wert an.

Im einfachsten Ausführungsbeispiel wird im Logikblock 16 der Zählwert Z mit einem Vergleichswert m1 verglichen. Liegt der Zählwert unterhalb des Werts m1, so wird mittels eines Ausgangssignals T1 das Vorliegen eines ersten Typs Aufzeichnungsträger, beispielsweise einer CD, angezeigt, während andernfalls das Vorliegen eines zweiten Typs, beispielsweise einer DVD, angezeigt wird. Nachdem der Typ Tn des Aufzeichnungsträgers bestimmt ist, wird die Vorgabe des Schwellwerts TH aufgehoben, dieser wird dann, wie weiter unten beschrieben, für den normalen Betrieb angepaßt.

Ausgestaltungsformen der Erfindung sehen vor, daß die Steuerungseinheit 26 nacheinander unterschiedliche Vorgaben für den Schwellwert TH an den Schwellwertbildner 14 vorgibt, die entsprechenden Ausgangssignale des Logikblocks 16 auswertet, daraufhin einen Disktyp Tn aus einer Vielzahl von Disktypen ermittelt und ein entsprechendes Ausgangssignal Tn abgibt. Der Speicher M dient dazu, Vorgabewerte, Zwischenresultate, Resultate oder weitere Parameter zu speichern. Der Logikblock 16 kann, wie weiter unten beschrieben, auch noch weitere Funktionen ausführen.

Fig. 2 zeigt in schematischer Darstellung einen Mirror-Signal-Detektor 1 eines erfindungsgemäßen Geräts. An seinem Eingang liegt ein Einhüllendensignal E, an seinem Ausgang das Mirror-Signal MIR an. Das Einhüllendensignal E wird mittels eines Einhüllenden-Detektors 2 aus einem digitalisierten Hochfrequenzsignal DHF erzeugt. Im Ausführungsbeispiel wird dazu ein Spitzenwertdetektor mit langsam abfallendem Haltewert verwendet, wie dies in der Blockdarstellung des Einhüllenden-Detektors 2 angedeutet ist. Das Hochfrequenzsignal DHF wird mittels eines Analog-Digital-Wandlers 3 erzeugt, an dessen Eingang ein hochfrequentes Datensignal HF liegt.

Fig. 4 zeigt ein schematisches Blockschaltbild eines erfindungsgemäßen Geräts. Ein optischer Aufzeichnungsträger 4, welcher schematisch angedeutete konzentrisch oder spiralförmig angeordnete Informationsspuren 25 aufweist, wird mittels eines von einem Abtastmittel 5 erzeugten Lichtstrahls 6 abgetastet. Der Lichtstrahl 6 wird dabei vom optischen Aufzeichnungsträger 4 reflektiert und gelangt auf Detektionselemente des Abtastmittels 5. Dort wird er in ein Datensignal HF und in Fehlersignale, hier exemplarisch als Spurfehlersignal TE und als Fokusfehlersignal FE angegeben, umgewandelt und vom Abtastmittel 5 ausgegeben. Das Datensignal HF wird mittels des Analog-Digital-Wandlers 3 in ein digitalisiertes Hochfrequenzsignal DHF umgewandelt, welches einerseits dem Mirror-Signal-Detektor 1 zugeführt wird und andererseits einer hier nur angedeuteten Demodulationsstufe 7. Die Demodulationsstufe 7 dient dazu, das zur Aufzeichnung auf dem Aufzeichnungsträger 4 modulierte Datensignal zu demodulieren und als Audiosignal oder demoduliertes Datensignal auszugeben. Der zu Fig. 2 beschriebene Einhüllenden-Detektor 2 ist in Fig. 4 nicht gesondert dargestellt, er ist beispielsweise Teil des Mirror-Signal-Detektors 1. Auch das Spurfehlersignal TE und das Fokusfehlersignal FE werden mittels Analog-Digital-Wandler 3' digitalisiert, das digitalisierte Spurfehlersignal DTE wird in einer Aufbereitungsstufe 8 in ein Signal DTE' umgewandelt und an eine Signalverarbeitungsstufe 9 weitergegeben. Diese empfängt auch das vom Mirror-Signal-Detektor 1 abgegebene Mirror-Signal MIR, verknüpft beide und gibt ein Signal an einen Spurregler 10 ab. Dieser gibt ein Stellsignal an das Abtastmittel 5 weiter, um dieses in bezüglich dem optischen Aufzeichnungsträger 4 radialer Richtung zu verschieben. Im Fall eines normalen Auslesens des Aufzeichnungsträgers 4 dient die radiale Verschiebung zum Nachführen des Lichtstrahls 6 auf einer Informationsspur 25 des optischen Aufzeichnungsträgers 4, während bei einem Suchvorgang die radiale Bewegung des Abtastmittels 5 dazu dient, eine vorgegebene Anzahl von Informationsspuren 25 zu überqueren. Die Anzahl der überquerten Spuren kann dabei beispielsweise durch Zählen der positiven Flanken des Mirror-Signals MIR bestimmt werden. Das Ergebnis dient dazu, das Abtastmittel 5 entsprechend radial zu verschieben, so daß die gesuchte Spur möglichst exakt erreicht wird.

Das digitalisierte Fokusfehlersignal DFE wird einer Fokusregelungseinheit 28 zugeführt, welche ein Signal zum Ansteuern optischer Elemente der Abtasteinheit 5 an diese abgibt. Dies erfolgt derart, daß der Lichtstrahl 6 auf die Informationsschicht des Aufzeichnungsträgers 4 fokussiert wird. Eine weitere Funktion der Fokusregelungseinheit 28 besteht nach einer Variante der Erfindung darin, in einem speziellen Betriebszustand den Fokuspunkt des Lichtstrahls 6 in axialer Richtung des Aufzeichnungsträgers 4 zu bewegen, und die dabei auftretenden Werte des Fokusfehlersignals FE auszuwerten. Aus dem Vorhandensein und den relativen Abständen und Werten von Maxima im Fokusfehlersignal FE wird die Schichtdicke der die Informationsschicht bedeckenden Schutzschicht bestimmt. Bei Vorliegen eines mehrschichtigen Aufzeichnungsträgers wird auch das Vorhandensein und der jeweilige Abstand mehrerer Schichten voneinander bestimmt. Die Fokusregelungseinheit 28 dient somit als Schichtdicken- oder als Abstandserkennungsmittel.

Die Steuerungseinheit 26, die dazu dient, den Typ des optischen Aufzeichnungsträgers 4, beispielsweise CD oder DVD, zu ermitteln, ist in dieser Abbildung schematisch als eigenständiger Block dargestellt. Ein Ausgang der Steuerungseinheit 26 ist mit dem Mirror-Signal-Detektor 1 verbunden, um einen bestimmten Schwellwert TH, wie weiter unten beschrieben, einzustellen. Ein weiterer Ausgang der Steuerungseinheit 26 ist mit dem Spurregler 10 verbunden um diesen abzuschalten oder um diesen nach einer anderen Variante der Erfindung so zu steuern, daß aktiv Informationsspuren 25 überquert werden. Ein Ausgang des Mirror-Signal-Detektors 1 ist mit einem Eingang der Steuerungseinheit 26 verbunden. Aus dem dabei übermittelten Signal, gegebenenfalls aus mehreren übermittelten, in einem Speicher M zwischengespeicherten Signalen, wird der Typ des gerade abgetasteten Aufzeichnungsträgers ermittelt.

Die einzelnen Bestandteile des Mirror-Signal-Detektors 1 werden nun anhand Fig. 2 näher erläutert. Das Einhüllendensignal E wird einem digitalen Tiefpaßfilter 11 zugeführt. Dessen Eckfrequenz EF1 ist variabel und wird entsprechend einem Steuersignal SL1 eingestellt. Beim hier dargestellten IIR-Filter erfolgt dies dadurch, daß der Systemtakt CLK durch einen vom Steuersignal SL1 vorgegebenen Wert geteilt wird und die somit reduzierte Frequenz den Arbeitstakt des digitalen Tiefpaßfilters 11 ergibt. Je niedriger der Arbeitstakt des Tiefpaßfilters 11 liegt, desto niedriger liegt auch dessen Eckfrequenz EF1. Das Ausgangssignal FIL des Filters 11 wird einem beispielsweise als Komparator ausgelegten Mirror-Signal-Bildner 13 zugeführt. Nach einer ersten Ausgestaltungsform vergleicht der Mirror-Signal-Bildner 13 dabei, das Signal FIL mit einem Schwellwert TH. Liegt der Wert des Signals FIL über dem Schwellwert TH, so wird der Wert des Mirror-Signals MIR auf einen ersten Wert, hier auf 1 gesetzt, liegt der Wert des Signals FIL dagegen unter dem Schwellwert TH, so wird das Mirror-Signal MIR auf einen zweiten Wert, hier auf den Wert 0 gesetzt.

Nach einer zweiten Variante vergleicht der Mirror-Signal-Bildner 13 das Signal FIL mit einem oberen Schwellwert UTH und einem unteren Schwellwert LTH. Dabei wird der Wert des Mirror-Signals MIR auf 1 gesetzt, wenn der Wert des Signals FIL über dem Wert des oberen Schwellwerts UTH liegt, er wird auf 0 gesetzt, wenn der Wert des Signals FIL unterhalb des unteren Schwellwerts LTH liegt. Der Wert des Mirror-Signals MIR bleibt ungeändert, solange sich der Wert des Signals FIL zwischen dem oberen Schwellwert UTH und dem unteren Schwellwert LTH befindet.

Eine Variante besteht darin, den Schwellwert TH beziehungsweise den oberen Schwellwert UTH und den unteren Schwellwert LTH konstant zu halten, bzw. nicht frequenzabhängig zu ändern. Vorteilhafterweise werden die Schwellwerte TH bzw. UTH und LTH aber frequenzabhängig angepaßt. Dazu ist ein zweites digitales Tiefpaßfilter 12 vorgesehen, welches ebenfalls als IIR-Filter ausgelegt ist. Die Eckfrequenz EF2 des Filters 12 wird, wie zum Filter 11 beschrieben, durch Herabsetzen des Systemtakts CLK um einen durch ein Steuersignal SL2 vorgegebenen Faktor zum Arbeitstakt des Filters 12 frequenzabhängig variiert. Aus dem Eingangssignal des Filters 12, dem Signal FIL, wird durch geeignet gewählte Filtercharakteristik ein mittlerer, von höherfrequenten Abweichungen freier Wert gebildet und als Schwellwert TH ausgegeben. Das Filter 12 wirkt somit als Mittelwertbildner. Der Schwellwert TH wird nach der oben beschriebenen ersten Variante direkt dem Mirror-Signal-Bildner 13 zugeführt, was in Fig. 2 gestrichelt dargestellt ist. Vorteilhafterweise wird er aber einem Schwellwertbildner 14 zugeführt, welcher aus dem Schwellwert TH mittels eines oberen Hysteresewerts UHY und eines unteren Hysteresewerts LHY, beispielsweise durch Addition bzw. Subtraktion, den oberen Schwellwert UTH und den unteren Schwellwert LTH bildet.

Das Mirror-Signal MIR wird sowohl ausgegeben als auch innerhalb des Mirror-Signal-Detektors 1 einem Frequenzzähler 15 zugeführt. Dieser arbeitet mit einem festen Takt CL1, welcher gerätespezifisch anpaßbar, im Betrieb aber konstant ist. Im Ausführungsbeispiel ist der Frequenzzähler 15 als 8-Bit-Zähler ausgelegt, dessen Überlauf das Ausgangssignal bildet. Soll das Ausgangssignal des Frequenzzählers 15 eine höhere Frequenz haben, so ist vorgesehen, den Wert des höchsten oder des zweithöchsten Zählerbits auszugeben. Auch jedes andere Bit ist, je nach gewünschter Frequenz, hierfür geeignet. Das Ausgangssignal des Frequenzzählers 15 bildet das Eingangssignal eines Logikblocks 16, welcher anhand vorgegebener Schwellwerte, entsprechend eines vorgegebenen Algorithmus, oder anhand einer gespeicherten Tabelle die Steuersignale SL1 und SL2 entsprechend seines Eingangssignals setzt.

Mittels des beschriebenen Ausführungsbeispiels ist es möglich, ein korrektes Mirror-Signal MIR zu erhalten, selbst bei der Verwendung eines optischen Aufzeichnungsträgers 4 hoher Speicherdichte, wie beispielsweise einer DVD, und bei hohen Spurkreuzfrequenzen. Dabei wird das Einhüllendensignal E, auch Hüllkurvensignal genannt, mit einem Schwellwert TH verglichen, um das Mirror-Signal MIR zu erzeugen. Da im Fall von Aufzeichnungsträgern 4 hoher Speicherdichte das Einhüllendensignal E beim Spurkreuzen nur um etwa 20% gegenüber dem Maximalwert moduliert ist, während dies bei herkömmlichen Aufzeichnungsträgern, wie bei einer CD, etwa 65% beträgt, sind erfindungsgemäß frequenzabhängige adaptive Filter 11, 12 vorgesehen. Die Frequenzabhängigkeit beginnt dabei mit niedriger Eckfrequenz EF1, EF2 zu Beginn eines Spurkreuzvorgangs, um hochfrequente Störeinflüsse, die etwa im Frequenzbereich der Spurkreuzfrequenz bei maximaler Spurkreuzgeschwindigkeit liegen, zu unterdrücken. Mit steigender Spurkreuzgeschwindigkeit, d.h. mit steigender Frequenz des Mirror-Signals MIR, wird die Eckfrequenz EF1 bzw. EF2 erhöht, um die dann notwendigen Frequenzen passieren zu lassen. Gegen Ende des Spurkreuzvorgangs wird die Eckfrequenz EF1, EF2 wieder heruntergesetzt. Um der schmaleren Modulationsbandbreite des Einhüllendensignals E, die wie beschrieben in der Größenordnung von lediglich 20% liegt, Rechnung zu tragen, ist zur Bildung des Schwellwerts TH das zweite Tiefpaßfilter 12 vorgesehen, das schnell auf Änderungen in der Amplitude des Datensignals HF und damit des Einhüllendensignals E reagiert, welche beispielsweise durch Exzentrizität des Aufzeichnungsträgers 4, durch Änderungen in der Reflektivität, oder durch andere Störeinflüsse hervorgerufen sein können. Auch das Tiefpaßfilter 12 ist frequenzabhängig adaptierbar. Die frequenzabhängige Anpassung der Filter 11, 12 hängt von der Spurkreuzfrequenz ab, weshalb ein Maß für diese Frequenz aus der Periode des Mirror-Signals MIR gewonnen wird. Das Einhüllendensignal E wird mittels des Einhüllendendetektors 2 durch Detektion des Spitzenwerts und langsames Abfallen, wie symbolisch angedeutet, erzeugt.

In Fig. 3 ist der typische Verlauf einiger im erfindungsgemäßen Gerät auftretender Signale über der Zeit t dargestellt. Das dem gefilterten Einhüllendensignal E entsprechende Ausgangssignal FIL ist frei von hochfrequenten Störüberlagerungen. Aus dem Signal FIL ist das durch Tiefpaßfilterung gewonnene Signal des Schwellwerts TH abgeleitet. Es ist geringer moduliert als das Signal FIL und weist aufgrund des internen Takts des Filters 12 Stufen auf. Durch Vergleich der Signale FIL und TH wird im Mirror-Signal-Bildner 13 das Mirror-Signal MIR gebildet, welches in Fig. 3 als invertiertes Mirror-Signal $\overline{MIR}$ dargestellt ist. $\overline{MIR}$ liegt auf einem Wert "High" bzw. 1, wenn das Signal FIL unterhalb des Schwellwerts TH liegt, während das invertierte

Mirror-Signal $\overline{MIR}$ auf "Low" bzw. dem Wert 0 liegt, wenn das Signal FIL über dem Schwellwert TH liegt. Der Pfeil 21 deutet die Periodenlänge des Mirror-Signals MIR an, aus der sich die Spurkreuzfrequenz ergibt, welche wiederum zu Adaption der Filter 11 bzw. 12 genutzt wird.

Das im Ausführungsbeispiel angewandte Verfahren zum frequenzabhängigen Bilden der Größe Mirror-Signal MIR wird anhand Fig. 2 beschrieben. In einem ersten Verfahrensschritt a) wird das Einhüllendensignal E mittels des Einhüllenden-Detektors 2 aus dem Datensignal HF gebildet. Anschließend wird es in Schritt b) mittels des Filters 11 unter Beachtung einer Grenzfrequenz EF1 gefiltert. Das gefilterte Einhüllendensignal FIL wird dann in Schritt c) mittels des Mirrorsignalbildners 13 mit einem Schwellwert TH verglichen. Die Größe Mirror-Signal MIR wird in Schritt d) auf einen ersten Wert gesetzt, wenn das gefilterte Einhüllendensignal FIL über dem Schwellwert TH liegt, und auf einen zweiten Wert, wenn es unterhalb des Schwellwerts TH liegt. Im Schritt e) wird die Frequenz des Mirror-Signals MIR mittels des Frequenzzählers 15 bestimmt. Ein Ändern des Werts der Grenzfrequenz EF1, EF2 in Abhängigkeit von der Frequenz des Mirror-Signals MIR erfolgt im Schritt f). Solange der Spurkreuzvorgang noch nicht abgeschlossen ist, erfolgt anschließend in Schritt g) ein Verzweigen zum ersten Schritt, ansonsten ist das Verfahren beendet. Der Schwellwert TH wird durch Mittelwertbildung des Einhüllendensignals E mittels des Filters 12 gebildet. Diese Mittelwertbildung erfolgt ebenfalls in Abhängigkeit von der Frequenz des Mirror-Signals MIR, hier durch entsprechende Variation des Steuersignals SL2. Aus dem Schwellwert TH werden mittels des Schwellwertbildners 14 ein oberer Schwellwert UTH und ein unterer Schwellwert LTH gebildet. Die Größe Mirror-Signal MIR wird dabei auf einen ersten Wert gesetzt, wenn das gefilterte Einhüllendensignal FIL über dem oberen Schwellwert UTH liegt und auf einen zweiten Wert, wenn es unterhalb des unteren Schwellwerts LTH liegt, ansonsten wird der vorhergehenden Wert der Größe Mirror-Signal MIR beibehalten.

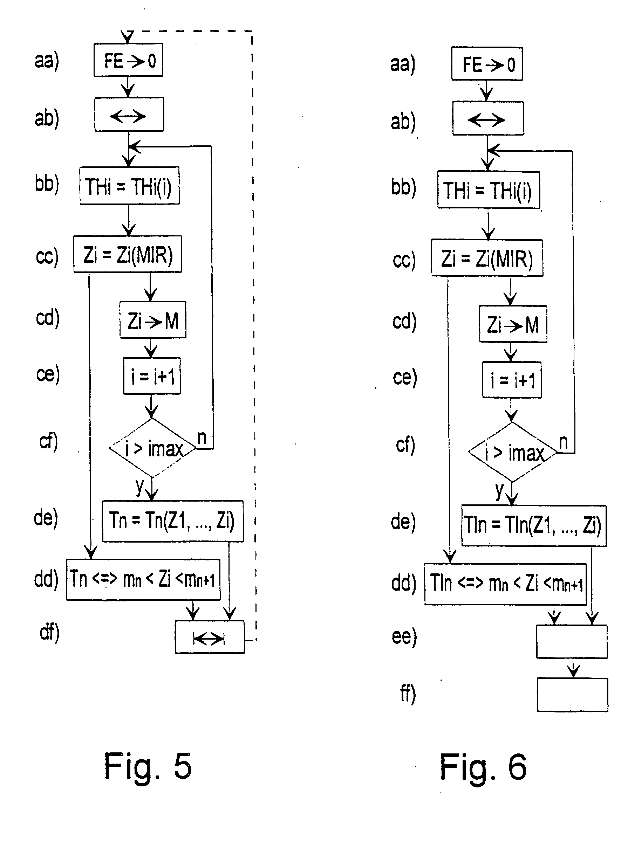

In Fig. 5 ist ein Flußdiagramm eines Ausführungsbeispiels eines erfindungsgemäßen Verfahrens zum Erkennen des Typs eines optischen Aufzeichnungsträgers abgebildet. Das Prinzip dieses Verfahrens besteht darin, eine Größe Mirror-Signal MIR in einem Gerät zum Lesen und/oder Beschreiben optischer Aufzeichnungsträger 4 auszunutzen. Dazu wird im Schritt aa) zunächst auf die Informationsschicht des Aufzeichnungsträgers 4 fokussiert. Dies geschieht mittels der Fokusregelungseinheit 28 in dem Fachmann bekannter Weise. Im fokussierten Zustand liegt der Wert des Fokusfehlersignals nahe bei Null, der Vorgang des Fokussierens ist daher hier mit FE→0 angedeutet. Im Schritt bb) wird ein Schwellwert TH zur Bildung des Mirrorsignals MIR vorgegeben. Nach einer Variante ist das mehrmalige Durchlaufen von Schritt bb) vorgesehen. In diesem Fall wird beim i-ten Durchlauf ein Schwellwert THi vorgegeben. Im folgenden wird der Index i auch dann angegeben, wenn es sich nicht um mehrmaliges Durchlaufen handelt. Aus dem mittels des Schwellwerts THi gebildeten Mirrorsignal MIR bildet der Zähler 15 einen Zählwert Zi. Dies ist in Schritt cc) angegeben. In Schritt dd) bzw. de) wird der Typ Tn des Aufzeichnungsträgers 4 aus dem bzw. den Zählwerten Zi bestimmt. In Schritt dd) ist eine einfache Variante angegeben, nach der es sich um den n-ten Typ Tn handelt, wenn der Zählwert Zi innerhalb eines durch Werte $m_n$ und $m_{n+1}$ begrenzten Wertebereichs liegt. Im Schritt de) ist allgemeiner angegeben, daß das Vorliegen des n-ten Typs Tn auch durch die Kombination mehrerer Zählwerte Zi definiert werden kann.

Gemäß einer Variante der Erfindung wird nach dem Schritt cc) im Schritt cd) der ermittelte Zählwert Zi zunächst abgespeichert, im Schritt ce) der Zählwert i erhöht und im Schritt cf) zum Schritt bb) verzweigt, solange ein Maximalwert imax nicht überschritten ist. Der Schwellwert THi wird dabei mehrmals geändert, die entsprechenden Zählwerte Zi werden gespeichert und beim abschließenden Durchlaufen des Schritts de) zur Bestimmung des Typs Tn genutzt. Nach einer Abwandlung ist vorgesehen, nach Schritt cc) zunächst zu prüfen, ob mit den bereits vorliegenden Informationen ein Typ Tn eindeutig bestimmbar ist, also zunächst Schritt de) auszuführen. Nur wenn es noch nicht möglich ist, den Typ zu bestimmen, wird dann zu Schritt cd) verzweigt, ansonsten endet der Vorgang.

Eine weitere Variante sieht vor, in Schritt df) eine Schichtdickenerkennung der die Informationsschicht bedeckenden Schutzschicht oder von ggf. mehrere Schichten des Aufzeichnungsträgers 4 trennenden Trennschichten durchzuführen. Die dabei ermittelte Schichtdicke dient als zusätzliche Information, die hier der Einfachheit halber ebenfalls wie ein Zählwert Zi bezeichnet ist, zur Ermittlung des Typs Tn in Schritt de). Der Schritt df) wird vorzugsweise an den oder mit dem Fokussiervorgang aus Schritt aa) gekoppelt.

Gemäß einer weiteren Variante wird nach Schritt aa) und vor Schritt bb) eine periodische Bewegung des Abtasters 5 in Radialrichtung gestartet. Dies ist in Schritt ab) angegeben. Die periodische Bewegung wird beendet, sobald der Typ des Aufzeichnungsträgers feststeht.

In Fig. 6 ist ein Flußdiagramm eines weiteren Ausführungsbeispiels eines erfindungsgemäßen Verfahrens abgebildet. Die Schritte aa) bis de) entsprechen dabei den zu Fig. 5 beschriebenen mit dem Unterschied, daß hier der Typ TIn der Informationsschicht, auf die fokussiert ist, ermittelt wird. Nachdem der Typ TIn bekannt ist, werden im Schritt ee) die Einstellungen des Geräts, insbesondere diejenigen für Spur-, Fokus- und sonstige Regelkreise auf den ermittelten Typ TIn der Informationsschicht angepaßt. Im Schritt ff) wird von der aktuellen Informationsschicht gelesen und anhand der gelesenen Information sowie ggf. des bereits bestimmten Typs TIn der Typ Tn des Aufzeichnungsträgers 4 bestimmt. Im allgemeinen ist der Typ Tn bereits den gelesenen Informationen entnehmbar, andernfalls wird er, etwa anhand einer gespeicherten Tabelle oder eines geeigneten Algorithmus, aus den gelesenen Informationen ermittelt.

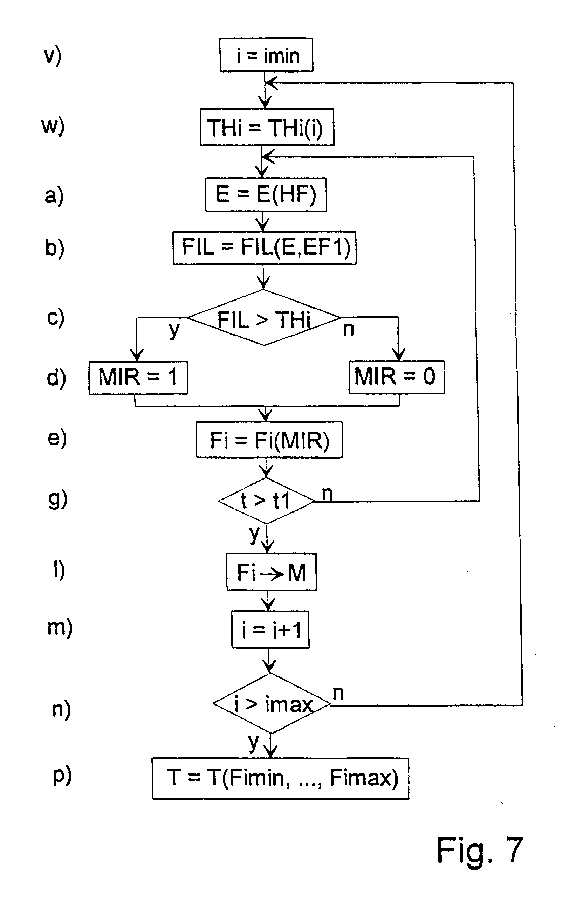

In Fig. 7 ist ein Flußdiagramm eines Ausführungsbeispiels eines erfindungsgemäßen Verfahrens zum Erkennen des Typs eines optischen Aufzeichnungsträgers abgebildet. Das Prinzip dieses Verfahrens besteht darin, eine Größe Mirror-Signal MIR in einem Gerät zum Lesen und/oder Beschreiben optischer Aufzeichnungsträger 4 auszunutzen. Dazu wird im Schritt w) ein Schwellwert THi vorgegeben, der im Schritt c) mit einem aus dem Datensignal HF abgeleiteten Ausgangssignal FIL verglichen wird, woraus im Schritt d) das Mirror-Signal MIR gebildet wird. Im Schritt e) wird geprüft, ob sich zu dem Schwellwert THi ein Mirror-Signal MIR bilden läßt, d.h. ob der Wert des Mirror-Signals MIR konstant bleibt oder sich mit einer Frequenz Fi, die durchaus variieren kann, ändert. Aus dieser Information, im einfachsten Fall Fi=0 oder Fi≠0, wird der Typ des Aufzeichnungsträgers 4 bestimmt. Dabei wird das Setzen des Schwellwerts THi ausgelöst von der Steuerungseinheit 26, welche den Schwellwertbildner 14 des Mirrorsignaldetektors 1 entsprechend ansteuert, von diesem die Frequenz Fi oder, wie oben beschrieben, einen Zählwert Zi übermittelt bekommt und den Typ Tn bestimmt.

Folgende Verfahrensschritte werden vorteilhafterweise zusätzlich zu den oben beschriebenen Schritten ausgeführt, sind aber nicht unbedingt alle für das erfindungsgemäße Verfahren erforderlich. Im Schritt v) wird ein Zählerwert i auf einen Anfangswert imin gesetzt. Im Normalfall ist imin=1, der Zählwert wird nur dann benötigt, wenn mehr als ein Schwellwert TH vorgegeben werden soll. Im Schritt w) wird ein Schwellwert TH entsprechend dem Zählwert i auf einen vorgegebenen Schwellwert THi gesetzt. Die Schritte a) und b), d.h. das Bilden eines Einhüllendensignals E aus dem Datensignal HF und das Filtern des Einhüllendensignals E unter Beachtung einer Grenzfrequenz EF1, entsprechen dem weiter oben beschriebenen Ausführungsbeispiel. Das gefilterte Einhüllendensignal FIL wird im Schritt c) mit dem Schwellwert THi verglichen, im Schritt d) erfolgt das Setzen der Größe Mirror-Signal MIR auf einen ersten Wert, hier den Wert 1, wenn das gefilterte Einhüllendensignal FIL über dem Schwellwert THi liegt, und auf einen zweiten Wert, hier den Wert Null, wenn es unterhalb des Schwellwerts THi liegt. Im Schritt e) wird die Frequenz Fi des Mirror-Signals MIR bestimmt. Eine Verzweigung zu Schritt a) erfolgt im Schritt g) falls eine vorgegebene erste Zeitdauer t1 noch nicht überschritten ist. Die Zeitdauer t1 ist dabei so gewählt, daß genügend Durchläufe der Schritte a) bis e) erfolgen, um eine aussagefähige Frequenz Fi ermitteln zu können. Der Wert der Frequenz Fi wird im Schritt 1) nach Überschreiten der ersten Zeitdauer t1 im Speicher M gespeichert. Diese Speicherung kann entfallen, wenn in dem Verfahren nur ein einziger Schwellwert THi verwendet wird. Auch das Erhöhen des Zählerwerts i um einen vorgegebenen Wert, im allgemeinen um den Wert 1, im Schritt m) ist nur bei Verwendung mehrerer Schwellwerte erforderlich. Im Schritt n) wird so oft zu Schritt w) verzweigt, bis der Zählwert i einen vorgegebenen Endwert imax überschritten hat. Anschließend wird im Schritt p) der Typ des Aufzeichnungsträgers 4 aus den ermittelten Frequenzen Fi bestimmt, wobei es im allgemeinen ausreicht, zwischen Fi=0 und Fi≠0 zu unterscheiden. Erfindungsgemäß wird sichergestellt, daß auf jeden Fall ein Mirror-Signal MIR erzeugt werden kann, indem dafür gesorgt wird, daß gleichzeitig mit der Ausführung der Verfahrensschritte Informationsspuren 25 des Aufzeichnungsträgers 4 überquert werden. Dazu wird der normale Spurführungsregelmodus des Spurreglers 10 vor der Ausführung des ersten Verfahrensschritts v) inaktiviert, und nach Beendigung des letzten Schritts p) wieder aktiviert. Während der Ausführung der Verfahrensschritte v) bis p) wird das Abtastmittel 5 beispielsweise über einen geeigneten Betriebsmodus des Spurreglers 10 derart angesteuert, daß Informationsspuren 25 überquert werden. Das Abtastmittel 5 wird dazu vorzugsweise periodisch, abwechselnd in positiver und negativer Richtung ausgelenkt.

**Patentansprüche**

1. Gerät zum Lesen und/oder Beschreiben optischer Aufzeichnungsträger (4) mit Disktyperkennungsmittel, aufweisend ein optisches Abtastmittel (5) und einen Fokusregelkreis (5,28), wobei das Disktyperkennungsmittel einen Mirrorsignalbildner (13), einen Zähler (15) und eine Auswerteeinheit (16) aufweist **dadurch gekennzeichnet, daß** das Disktyperkennungsmittel weiterhin einen Schwellwertbildner (12,14) zum Bilden eines von mehreren möglichen Schwellwerten (TH) aufweist.

2. Gerät nach Anspruch 1, **dadurch gekennzeichnet, daß** Eingänge des Mirrorsignalbildners (13) mit einem Ausgang des Abtastmittels (5) und mit dem Schwellwertbildner (12,14) verbunden sind, daß der Zähler (15) mit einem Ausgang des Mirrorsignalbildners (13) und mit einem Eingang der Auswerteeinheit (16) verbunden ist.

3. Gerät nach Anspruch 1 oder 2, **dadurch gekennzeichnet, daß** das Gerät ein Schichtdickenerkennungsmittel zum Bestimmen der eine Informationsschicht des Aufzeichnungsträgers (4) bedeckenden Schutzschicht oder ein Abstandserkennungsmittel zum Bestimmen des Abstands zweier Informationsschichten aufweist.

4. Verfahren zum Erkennen des Typs eines optischen Aufzeichnungsträgers (4), aufweisend die folgenden Verfahrensschritte:

aa) Fokussieren auf eine Informationsschicht des Aufzeichnungsträgers (4)
bb) Setzen eines von mehreren möglichen Schwellwerten (THi) für die Erzeugung eines Mirrorsignals (MIR), der zumindest für einen Typ Aufzeichnungsträger (4) zum Erzeugen des Mirrorsignals (MIR) ungeeignet ist
cc) Zählen von Übergängen des Mirrorsignals (MIR)
dd) Ermitteln des Typs (Tn) des Aufzeichnungsträgers (4) anhand des Zählwerts (Zi).

5. Verfahren nach Anspruch 4, wobei im Schritt dd) der Aufzeichnungsträger als zu einem n-ten Typ gehörig ermittelt wird, wenn der Zählwert in einem n-ten Wertebereich liegt, wobei n eine ganze Zahl ist.

6. Verfahren nach einem der Ansprüche 4 oder 5, **dadurch gekennzeichnet, daß** der Abtaststrahl (6) über einen Bereich des Aufzeichnungsträgers (4) bewegt wird, der größer ist als ein der maximal auftretenden Exzentrizität entsprechender Bereich.

7. Verfahren nach einem der Ansprüche 4 bis 6, **dadurch gekennzeichnet, daß** die Schritte bb) bis cc) mehrfach durchlaufen werden, wobei im Schritt bb) jeweils ein anderer Schwellwert (THi) gesetzt wird.

8. Verfahren nach einem der Ansprüche 4 bis 7, **dadurch gekennzeichnet, daß** nach Bestimmung des Typs geprüft wird, ob ein Fokussieren auf eine weitere Informationsschicht möglich ist.

9. Verfahren nach einem der Ansprüche 4 bis 7, **dadurch gekennzeichnet, daß** das Verfahren zunächst zur Identifikation des Typs (TIn) der Informationsschicht, auf die fokussiert wird, genutzt wird, daß die Einstellungen des Geräts auf den ermittelten Schichttyp (TIn) angepaßt werden, daß von der Informationsschicht gelesen und aus der gelesenen Information der Typ (Tn) des Aufzeichnungsträgers (4) bestimmt wird.

10. Verfahren nach einem der Ansprüche 4 - 9, wobei geprüft wird, ob sich aus einem Datensignal (HF) und einem Schwellwert ein Rechtecksignal bilden läßt und aus dieser Information der Typ des Aufzeichnungsträgers (4) bestimmt wird, **dadurch gekennzeichnet, daß** das Rechtecksignal ein Mirror-Signal (MIR) ist, welches aus einem Einhüllendensignal (E) des Datensignals (HF) gebildet wird.

11. Verfahren zum Erkennen des Typs eines optischen Aufzeichnungsträgers (4) mittels einer Größe Mirror-Signal (MIR) in einem Gerät zum Lesen und/oder Beschreiben optischer Aufzeichnungsträger (4), bestehend aus den folgenden Verfahrensschritten:

v) Setzen eines Zählerwerts (i) auf einen Anfangswert (imin) w) Setzen eines Schwellwerts (TH) auf einen von mehreren vorgegebenen Schwellwerten (THi)

a) Bilden eines Einhüllendensignals (E) aus einem Datensignal (HF)
b) Filtern des Einhüllendensignals (E) unter Beachtung einer Grenzfrequenz (EF1)
c) Vergleichen des gefilterten Einhüllendensignals (FIL) mit dem Schwellwert (THi)
d) Setzen der Größe Mirror-Signal (MIR) auf einen ersten Wert, wenn das gefilterte Einhüllendensignal (FIL) über dem Schwellwert (THi) liegt, und auf einen zweiten Wert, wenn es unterhalb des Schwellwerts (THi) liegt
e) Bestimmen der Frequenz (Fi) des Mirror-Signals (MIR)
g) Verzweigen zu Schritt a) falls eine vorgegebene erste Zeitdauer (t1) nicht überschritten ist
l) Speichern des Werts der Frequenz (Fi) falls die erste Zeitdauer (t1) überschritten ist
m) Erhöhen des Zählerwerts (i) um einen vorgegebenen Wert
n) Verzweigen zu Schritt w) falls der Zählerwert (i) einen vorgegebenen Endwert (imax) nicht überschreitet
p) Bestimmen des Typs des Aufzeichnungsträgers (4) aus den ermittelten Frequenzen (Fi)

12. Verfahren nach einem der Ansprüche 4 bis 11**, dadurch gekennzeichnet, daß** gleichzeitig Informationsspuren (25) des Aufzeichnungsträgers (4) überquert werden.

**Claims**

1. Apparatus for reading from and/or writing to optical recording media (4) having disk type identification means, having an optical scanning means (5) and a focus regulating circuit (5, 28), where the disk type identification means has a mirror signal-forming unit (13), a counter (15) and an evaluation unit (16), **characterized in that** the disk type identification means furthermore has a threshold value-forming unit (12, 14) for forming one of a plurality of possible threshold values (TH).

2. Apparatus according to Claim 1, **characterized in that** inputs of the mirror signal-forming unit (13) are connected to an output of the scanning means (5) and to the threshold value-forming unit (12, 14), **in that** the counter (15) is connected to an output of the mirror signal-forming unit (13) and to an input of the evaluation unit (16).

3. Apparatus according to Claim 1 or 2, **characterized**

**in that** the apparatus has a layer thickness identification means for determining the protective layer which covers an information layer of the recording medium (4), or a spacing identification means for determining the spacing between two information layers.

4. Method for identifying the type of an optical recording medium (4), having the following method steps:

aa) focusing onto an information layer of the recording medium (4)
bb) setting of one of a plurality of possible threshold values (THi) for the generation of a mirror signal (MIR), which threshold value is unsuitable for generating the mirror signal (MIR) at least for one type of recording medium (4)
cc) counting of transitions of the mirror signal (MIR)
dd) determination of the type (Tn) of the recording medium (4) using the count (Zi).

5. Method according to Claim 4, where, in step dd), the recording medium is determined as being associated with an nth type if the count lies in an nth range of values, where n is an integer.

6. Method according to either of Claims 4 and 5, **characterized in that** the scanning beam (6) is moved across a region of the recording medium (4) which is larger than a region which corresponds to the maximum eccentricity that occurs.

7. Method according to one of Claims 4 to 6, **characterized in that** steps bb) to cc) are performed a number of times, a different threshold value (THi) being set in each case in step bb).

8. Method according to one of Claims 4 to 7, **characterized in that** after the type has been determined, a check is made to see whether focusing onto a further information layer is possible.

9. Method according to one of Claims 4 to 7, **characterized in that** the method is first of all utilized for identifying the type (TIn) of the information layer onto which focusing is effected, **in that** the settings of the apparatus are adapted to the layer type (TIn) that has been determined, **in that** information is read from the information layer and the type (Tn) of recording medium (4) is determined from the information read.

10. Method according to one of Claims 4-9, where a check is made to see whether a square-wave signal can be formed from a data signal (HF) and a threshold value and the type of recording medium (4) is determined from this information, **characterized in**

**that** the square-wave signal is a mirror signal (MIR) formed from an envelope signal (E) of the data signal (HF).

11. Method for identifying the type of an optical recording medium (4) by means of a parameter mirror signal (MIR) in an apparatus for reading from and/or writing to optical recording media (4), comprising the following method steps:

> v) setting of a counter value (i) to a start value (imin)
> w) setting of a threshold value (TH) to one of a plurality of specified threshold values (THi)
>
> > a) formation of an envelope signal (E) from a data signal (HF)
> > b) filtering of the envelope signal (E) taking account of a cut-off frequency (EF1)
> > c) comparison of the filtered envelope signal (FIL) with the threshold value (THi)
> > d) setting of the parameter mirror signal (MIR) to a first value if the filtered envelope signal (FIL) lies above the threshold value (THi), and to a second value if it lies below the threshold value (THi)
> > e) determination of the frequency (Fi) of the mirror signal (MIR)
> > g) branching to step a) if a specified first time interval (t1) is not exceeded
> > l) storage of the value of the frequency (Fi) if the first time interval (t1) is exceeded
> > m) incrementing of the counter value (i) by a specified value
> > n) branching to step w) if the counter value (i) does not exceed a specified end value (imax)
> > p) determination of the type of recording medium (4) from the frequencies (Fi) established.

12. Method according to one of Claims 4 to 11, **characterized in that** information tracks (25) of the recording medium (4) are traversed simultaneously.

## Revendications

1. Appareil de lecture et/ou d'écriture de supports d'enregistrement optiques (4) comportant un élément d'identification de type de disque, présentant un dispositif de balayage optique (5) et une boucle de régulation de foyer (5, 28), où l'élément d'identification de type de disque présente un générateur de signal de miroir (13), un compteur (15) et une unité d'évaluation (16), **caractérisé en ce que** l'élément d'identification de type de disque présente en outre un générateur de seuil (12, 14) pour constituer l'une des nombreuses valeurs de seuil possibles (TH).

2. Appareil conforme à la revendication 1, **caractérisé en ce que** les entrées du générateur de signal de miroir (13) sont reliées à une sortie du dispositif de balayage (5) et au générateur de seuil (12, 14), **en ce que** le compteur (15) est relié à une sortie du générateur de signal de miroir (13) et à une entrée de l'unité d'évaluation (16).

3. Appareil conforme à la revendication 1 ou 2, **caractérisé en ce que** l'appareil présente un élément d'identification de l'épaisseur de couche pour déterminer la couche protectrice recouvrant une couche d'informations du support d'enregistrement (4) ou un élément d'identification de l'écart pour déterminer l'espacement de deux couches d'informations.

4. Procédé pour identifier le type d'un support d'enregistrement optique (4), présentant les étapes de procédé suivantes :

> aa) Focalisation sur une couche d'informations du support d'enregistrement.
> bb) Détermination de l'une des valeurs de seuil possibles (THi) pour la production d'un signal de miroir (MIR) qui n'est pas adaptée au moins à un type de support d'enregistrement (4) pour la production du signal de miroir (MIR).
> cc) Décompte des changements d'état du signal de miroir (MIR).
> dd) Détection du type (Tn) de support d'enregistrement (4) à l'aide de la valeur de décompte (Zi).

5. Procédé conforme à la revendication 4, où, à l'étape dd), le support d'enregistrement est détecté comme faisant partie d'un nième type, si la valeur de décompte figure dans une nième plage de valeurs, où n est un nombre entier.

6. Procédé conforme à l'une des revendications 4 ou 5, **caractérisé en ce que** le faisceau de balayage (6) est déplacé au-dessus d'une zone du support d'enregistrement (4) qui est plus grande que la zone correspondant à l'excentricité maximale pouvant survenir.

7. Procédé conforme à l'une des revendications 4 à 6, **caractérisé en ce que** les étapes bb) et cc) sont parcourues plusieurs fois, et **en ce que** à l'étape bb) une autre valeur de seuil (THi) est définie à chaque passage.

8. Procédé conforme à l'une des revendications 4 à 7, **caractérisé en ce que** l'on vérifie, après détermination du type, si une focalisation sur une autre couche d'informations est possible.

**9.** Procédé conforme à l'une des revendications 4 à 7, **caractérisé en ce que** le procédé est d'abord utilisé pour l'identification du type (Tin) de la couche d'informations sur laquelle la focalisation est réalisée, **en ce que** les réglages de l'appareil sont adaptés au type de couche (Tin) détecté, et **en ce que** une lecture est effectuée à partir de la couche d'informations et à partir de l'information lue, le type (Tn) du support d'enregistrement (4) est déterminé.

**10.** Procédé conforme à l'une des revendications 4 à 9, où l'on vérifie si un signal rectangulaire peut se former à partir d'un signal de données (HF) et d'une valeur de seuil et où l'on détermine, à partir de cette information, le type du support d'enregistrement (4), **caractérisé en ce que** le signal rectangulaire est un signal de miroir (MIR) qui est constitué à partir d'un signal d'enveloppante (E) du signal de données (HF).

**11.** Procédé d'identification du type d'un support d'information optique (4) à l'aide d'une grandeur de signal de miroir (MIR) dans un appareil de lecture et/ou d'écriture de supports d'enregistrement optiques (4), composé des étapes de procédé suivantes :

v) Définition d'une valeur de compteur (i) sur une valeur initiale (imin).
w) Définition d'une valeur seuil (TH) sur l'une des valeurs de seuil prédéfinies (THi).

a) Constitution d'un signal d'enveloppante (E) à partir d'un signal de données (HF).
b) Filtrage du signal d'enveloppante (E) en prenant en compte une fréquence limite (EF1).
c) Comparaison du signal d'enveloppante filtré (FIL) avec la valeur de seuil (THi).
d) Définition de la grandeur du signal de miroir (MIR) sur une première valeur, si le signal d'enveloppante filtré (FIL) est supérieur à la valeur de seuil (THi), et sur une seconde valeur s'il est inférieur à la valeur de seuil (THi).
e) Détermination de la fréquence (Fi) du signal de miroir (MIR).
g) Retour à l'étape a) si une première durée prédéfinie (t1) n'est pas dépassée.
l) Mémorisation de la valeur de la fréquence (Fi) si la première durée (t1) est dépassée.
m) Augmentation de la valeur de compteur (i) d'une valeur prédéfinie.
n) Retour à l'étape w) si la valeur de compteur (i) ne dépasse pas une valeur finale (imax) prédéfinie.

p) Détermination du type de support d'enregistrement (4) à partir des fréquences (Fi) détectées.

**12.** Procédé conforme à l'une des revendications 4 à 11, **caractérisé en ce que** pendant les étapes les pistes de données (25) du support d'information (4) sont traversées.

## Fig. 1

HF → | 12 , 14 |     | M | ↔ | 26 | → Tn

TH, UTH, LTH ↓

| 13 | → MIR → | 15 | → Z → | 16 | → T1 → T2

## Fig.3

FIL

TH

MIR

21

t

## Fig.4

4  25

7

26

M → Tₙ

6

5

HF → A/D (3) → DHF → 1 → MIR → 9

FE

TE → A/D (3') → DTE → 8 → DTE'

28 → DFE

10

Fig.2

aa) $\boxed{FE \rightarrow 0}$

ab) $\boxed{\leftrightarrow}$

bb) $\boxed{THi = THi(i)}$

cc) $\boxed{Zi = Zi(MIR)}$

cd) $\boxed{Zi \rightarrow M}$

ce) $\boxed{i = i+1}$

cf) $\diamond i > imax$   n

y

de) $\boxed{Tn = Tn(Z1, ..., Zi)}$

dd) $\boxed{Tn <=> m_n < Zi < m_{n+1}}$

df) $\boxed{\mid\leftrightarrow\mid}$

## Fig. 5

aa) $\boxed{FE \rightarrow 0}$

ab) $\boxed{\leftrightarrow}$

bb) $\boxed{THi = THi(i)}$

cc) $\boxed{Zi = Zi(MIR)}$

cd) $\boxed{Zi \rightarrow M}$

ce) $\boxed{i = i+1}$

cf) $\diamond i > imax$   n

y

de) $\boxed{Tln = Tln(Z1, ..., Zi)}$

dd) $\boxed{Tln <=> m_n < Zi < m_{n+1}}$

ee) $\boxed{\phantom{xxxx}}$

ff) $\boxed{\phantom{xxxx}}$

## Fig. 6

v)    i = imin

w)    THi = THi(i)

a)    E = E(HF)

b)    FIL = FIL(E,EF1)

c)    FIL > THi   y   n

d)    MIR = 1     MIR = 0

e)    Fi = Fi(MIR)

g)    t > t1   n

l)    Fi → M

m)    i = i+1

n)    i > imax   n

p)    T = T(Fimin, ..., Fimax)

Fig. 7